# EUROPEAN PATENT APPLICATION

(11) **EP 3 901 790 A1**
(43) Date of publication of application: **27.10.2021**
(21) Application number: 19900453.2
(22) Date of filing: 16.01.2019
(51) Int. Cl.: G06F 16/958, G06F 16/957, G06F 16/955

(54) **DETERMINING METHOD FOR A COMMON COMPONENT OF PAGES, SERVER AND STORAGE MEDIUM**

(30) Priority: 22.12.2018 CN 201811575703
(71) Applicant: Wangsu Science & Technology Co., Ltd., Shanghai 200030 (CN)
(72) Inventor: ZHAO, Zhiwen, Shanghai 200030 (CN); LIN, Tumu, Shanghai 200030 (CN); ZHOU, Jian, Shanghai 200030 (CN)
(74) Representative: De Arpe Tejero, Manuel
(86) International application number: PCT/CN2019/071878
(87) International publication number: WO 2020/124720

(57) **Abstract**

Embodiments of the present disclosure relate to a network technology field and disclose a method, server, and storage medium for determining common components of a page. In some embodiments of the present disclosure, the method for determining the common components of the page includes: determining information of a first page and information of a reference page corresponding to an identifier of the first page; and according to the information of the first page and the information of the reference page, determining common components of the first page and the reference page. In the present disclosure, manual configuration of the common components is not needed, which solves a poor feasibility problem of manually configuring the common components, such that the server is able to recognize the common components automatically.

## Description

### TECHNICAL FIELD

The present disclosure relates to a network technology field and, more particularly, to a method, server, and storage medium for determining common components of a page.

### BACKGROUND

A dynamic page is a page with different contents provided by a uniform resource identifier (URI). The dynamic page is generally generated by going through a series of operations such as a database query, etc., to insert data into a front-end template. When a server queries dynamic data, a browser of a client terminal is always at a waiting idle state, which results in a sense of delay. By further subdividing the dynamic page, common parts are always found existing between different versions of pages generated by the same URI, that is, common components exist. The common components may include a logo and other pictures of the page. The common components are basically the same in contents of multiple requests and responses. If these common components can be extracted to form a public page under this URI, an edge caches these public components (called cache root). When the client terminal requests a newest page, the public page (i.e., cache root) is sent to the client terminal at first, which reduces waiting time of the client terminal. The cache root is then compared with a page returned by an original site, and different parts are used to repair the cache root returned to the client, which can speed up the page display.

However, the inventors found that the following problems exist in the existing technology. Currently, those of skilled implement the above-mentioned ideas through following methods. When a dynamic page request of a browser passes through a proxy node, a beginning part of a response to a Hyper Text Markup Language (HTML) page is first constructed, which uses a <script> label and a <style> label after the beginning part (<head> label) to include common components to be pre-downloaded at the beginning part. When the client terminal sends the request, this part of response is first sent to the browser of the client terminal. When the client parses this part of the response, the request for these common components is triggered. However, the content (i.e., common components) of the beginning part of the constructed response is manually configured. The manual configuration exists following serious deficiencies: CD the content of the common components of the page needs to be obtained with communication in advance, such that the content can be manually configured; ② the common components of the page are often changed, if the common components are changed, the configuration needs to be updated, amount of the configuration is large, and a situation of unable to change in time is easy to happen; and ③ for an edge cache that processes a plurality of content providers, a manual method of fragment detection becomes difficult to manage and impractical.

It should be noted that information disclosed in the above-mentioned technical background part is merely used to enhance understanding of the background of the present disclosure, so the present disclosure may include information that does not constitute the existing technology known to those of ordinary skill in the art.

### SUMMARY

Purposes of embodiments of the present disclosure include providing a method, sever, and storage medium for determining common components of a page without manually configuring the common components, such that a poor feasibility problem of determining the common components is solved, and the server is caused to recognize the common components automatically.

To solve the above-mentioned problem, embodiments of the present disclosure provide a method for determining common components of a page, which includes following processes: receiving a first page; determining information of the first page and information of a reference page corresponding to an identifier of the first page; according to the information of the first page and the information of the reference page, determining the common components of the first page and the reference page.

Embodiments of the present disclosure further provide a server, which includes: at least one processor; a memory communicatively coupled to the at least one processor; where the memory stores instructions executable by the at least one processor, and the instructions are executed by the at least one processor to cause the at least one processor to execute the method for determining the common components of the page mentioned by the above embodiments.

Embodiments of the present disclosure further provide a computer-readable storage medium storing a computer program, where the computer program is executed by a processor to implement the method for determining the common components of the page of the above-mentioned embodiments.

Compared to the existing technology, in embodiments of the present disclosure, the server compares the first page with the reference page, and can determine the common components of the first page and the reference page without manual inquiry and the manual configuration, which avoids a poor feasibility problem of manually configuring the common components.

In addition, the information of the first page is a document object model (DOM) node tree of the first page, and the information of the reference page is a DOM node tree of the reference page.

According to the information of the first page and the information of the reference page, determining the common components of the first page and the reference page includes: determining a data length of each node in the DOM node tree of the first page and a data length of each node in the DOM node tree of the reference page; comparing the data lengths of nodes in the DOM node tree of the first page and the data lengths of nodes in the DOM node tree of the reference page to determine common nodes of the DOM node tree of the first page and the DOM node tree of the reference page; and using the common nodes as the common components of the first page and the reference page.

In addition, comparing the data lengths of the nodes in the DOM node tree of the first page and the data lengths of the nodes in the DOM node tree of the reference page to determine the common nodes of the DOM node tree of the first page and the DOM node tree of the reference page includes: according to the data lengths of the nodes in the DOM node tree of the first page and the data lengths of the nodes in the DOM node tree of the reference page, dividing the nodes in the DOM node tree of the first page and the nodes in the DOM node tree of the reference page into a number N comparison sets; where the data lengths of the nodes of each comparison set belong to a same pre-set range, and N is a positive integer; and comparing the nodes belonging to a same comparison set to determine the common nodes. In the embodiments, by dividing the nodes in the DOM node tree of the first page and the nodes in the DOM node tree of the reference page into the number N comparison sets, the sever avoids comparing two nodes with large data lengths, which reduces comparison times and avoids wasting computing resources.

In addition, comparing the nodes belonging to the same comparison set to determine the common nodes includes: for each node of each of the comparison sets, performing following processes: determining whether the node belongs to the DOM node tree of the first page; if belonging to, determining in the comparison set, whether there is a node belonging to the DOM node tree of the reference page whose difference from the node is smaller than a preset value; if there is the node, using the node and/or the node belonging to the DOM node tree of the reference page whose difference from the node is smaller than the pre-set value as the common components; if not belonging to, determining in the comparison set, whether there is a node belonging to the DOM node tree of the first page whose difference from the node is smaller than a preset value; if there is the node, using the node and/or the node belonging to the DOM node tree of the first page whose difference from the node is smaller than the pre-set value as the common components.

In addition, after determining the common components of the first page and the reference page according to the information of the first page and the information of the reference page, the method for determining the common components of the page further includes: according to the common components of the first page and the reference page, determining a first common component set corresponding to the identifier of the first page; and according to the first common component set, generating a cache root corresponding to the identifier of the first page. In the embodiments, according to a common component set, a server generates a cache root corresponding to an identifier, such that, when receiving a page request sent by a client terminal, the server can send the cache root corresponding to the identifier of the page request to the client terminal to reduce a sense of delay.

In addition, before generating the cache root corresponding to the identifier of the first page according to the first common component set, the method for determining the common components of the page further includes: determining a second common component set corresponding to the identifier of the first page, where the second common component set is a last determined common component set corresponding to the identifier of the first page; and determining a number of components of the first common component set less than a number of components of the second common component set.

In addition, before determining the number of the components of the first common component set less than the number of the components of the second common component set, the method for determining the common components of the page further includes: determining that the cache root corresponding to the identifier of the first page is not expired; or determining that a current learning cycle of the identifier of the first page is not ended. In the embodiments, the server, based on a certain learning cycle, learns the common components of the page, or by setting a valid period for the cache root, influence of the page information received by the page before change on accuracy of a learning result can be reduced.

In addition, after determining the number of the components of the first common component set less than the number of the components of the second common component set, the method for determining the common components of the page further includes: according to the information of the first page, updating the information of the reference page corresponding to the identifier of the first page.

In addition, after determining the information of the reference page corresponding to the identifier of the first page, the method for determining the common components of the page further includes: if the information of the reference page is determined blank, using the information of the first page as information of a reference page of a next process of determining common components of a page.

In addition, before receiving the first page, the method for determining the common components of the page further includes: process a: receiving a first page request sent by the client terminal, where the first page request includes an identifier of a page requested to be accessed; process b: determining whether the cache root corresponding to the identifier of the page requested to be accessed exists; if yes, executing process c, otherwise executing process d; process c: sending the cache root corresponding to the identifier of the page requested to be accessed to the client terminal, and then executing process d; and process d: according to the first page request, determining a second page request and sending the second page request to a origin server.

In addition, after receiving the first page, the method for determining the common components of the page further includes: according to the first page and the cache root corresponding to the identifier of the page requested to be accessed, determining repair instructions; and sending the repair instructions to the client terminal.

In addition, the identifier is a uniform resource identifier (URI).

### BRIEF DESCRIPTION OF THE DRAWINGS

One or a plurality of embodiments are exemplarily described through corresponding pictures of the reference drawings. The exemplary description does not limit the embodiments. Elements with same reference numerals in the reference drawings represent similar elements, unless otherwise stated, the pictures in the drawings do not constitute a scale limitation.
FIG. 1 is a flowchart of a method for determining common components of a page of a first embodiment of the present disclosure;
FIG. 2 is a schematic diagram of a document object model (DOM) node tree of a first page of the first embodiment of the present disclosure;
FIG. 3 is a schematic diagram of a DOM node tree of a reference page of the first embodiment of the present disclosure;
FIG. 4 is a flowchart of a method of generating a cache root of the page by a server of the first embodiment of the present disclosure;
FIG. 5 is a schematic diagram of an interaction among a server, a client terminal, and a origin server of the first embodiment of the present disclosure;
FIG. 6 is a flowchart of a method for determining common components of a page of a second embodiment of the present disclosure;
FIG. 7 is a schematic diagram of a process of determining the common components by a server of the second embodiment of the present disclosure;
FIG. 8 is a schematic structural diagram of a determination device of common components of a page of a third embodiment of the present disclosure; and
FIG. 9 is a schematic structural diagram of a server of a fourth embodiment of the disclosure.

### DETAILED DESCRIPTION

To make purposes, technical solutions, and advantages of the present disclosure clearer, embodiments of the present disclosure will be further described in detail below in conjunction with drawings. However, those of ordinary skill in the art can understand that, in the embodiments of the present disclosure, many technical details are provided for readers to better understand the present disclosure. However, even without these technical details and various changes and modifications based on the following embodiments, the technical solution claimed in the present disclosure can be implemented.

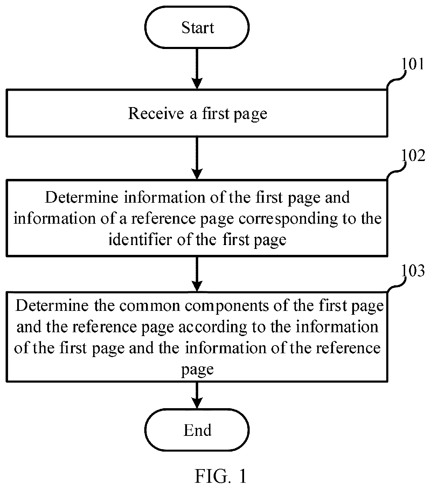

A first embodiment of the present disclosure relates to a method for determining common components of a page, which is applied to a server. The server may be a proxy server, an edge server in a content distribution network, etc. As shown in FIG. 1, the method for determining the common components of the page includes the following processes.

At 101, the server receives a first page.

Specifically, the first page may be a page returned by a origin server, where the origin server, after receiving a page request sent by the server, returns the page corresponding to an identifier of the page request.

At 102, the server determines information of the first page and information of a reference page corresponding to the identifier of the first page.

Specifically, the identifier of the first page may be a uniform resource identifier (URI) of the first page and may also be other page identifiers.

In an embodiment, the information of the first page may be a document object model (DOM) node tree of the first page, and the information of the reference page may be a DOM node tree of the reference page.

It should be noted that those of skilled in the art should understand that, in an application example, information of a page may also be other specific information, which can represent components of the page, and the present disclosure does not limit the content of the page information.

In an embodiment, after the information of the reference page corresponding to the identifier of the first page is determined, if the server determines that the information of the reference page is blank, the information of the first page is used as information of a reference page for a next process of determining common components of a page.

It should be noted that those of skilled in the art should understand that after the information of the reference page is determined to be blank, the server can end the current process of determining the common components of the page and enter the next process of determining the common components of the page, or may further execute process 103.

In an embodiment, after the server determines that the information of the reference page is blank, the server ends the current process of determining the common components of the page and continues to receive a subsequent page. When the server receives a second page corresponding to the identifier of the first page, according to the second page, the server performs a process of determining common components corresponding to the identifier of the first page.

For example, at a first moment, the server receives the first page, and the identifier corresponding to the first page is S. Prior to the first moment, the server never receives a page with an identifier of S, and the information of the reference page is blank. At this moment, the server uses the first page as the reference page, that is, the server uses the information of the first page as the information of the reference page. At a second moment, the server receives the second page, and an identifier corresponding to the second page is S. At this moment, the information of the reference page is the information of the first page.

In an embodiment, after the server determines that the information of the reference page is blank, the server continues to execute process 103. Since the information of the reference page is blank, no common component is determined between the reference page and the first page.

It can be known from the above-mentioned content that those of skill in the art should understand that the server triggers the process of determining common components of a page, each time when the server receives a page returned by a origin server. The server continues to monitor the page, such that, when the common components of the page are changed, the server can update the common components in time according to the page after change, which is more timely and convenient compared to a method of manually changing the common components.

At 103, according to the information of the first page and the information of the reference page, the server determines the common components of the first page and the reference page.

Specifically, when the information of the first page may be a document object model (DOM) node tree of the first page, and the information of the reference page may be a DOM node tree of the reference page, the server determines a data length of each node in the DOM node tree of the first page and a data length of each node in the DOM node tree of the reference page. The server compares the data lengths of the nodes in the DOM node tree of the first page with the data lengths of the nodes in the DOM node tree of the reference page to determine common nodes of the DOM node tree of the first page and the DOM node tree of the reference page. The server uses the common nodes as the common components of the first page and the reference page.

In a specific implementation, the server directly compares the data lengths of the nodes in the DOM node tree of the first page with the data lengths of the nodes in the DOM node tree of the reference page, and according to a comparison result, determines the common nodes of the DOM node tree of the first page and the DOM node tree of the reference page.

In combination with actual situations below, examples are taken to describe a process by which a server determines common components according to a first method.

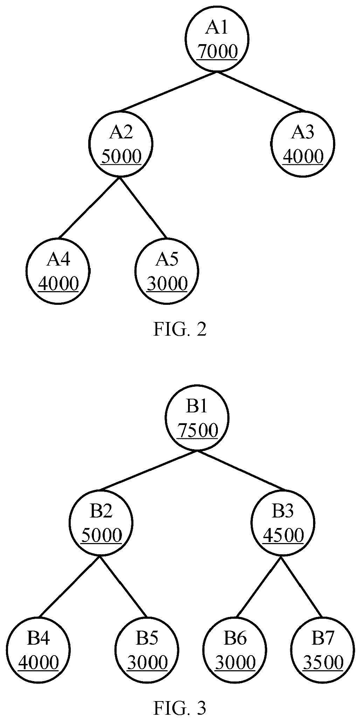

Assume that the DOM node tree (abbr. node tree 1) of the first page is shown in FIG. 2, and the DOM node tree (abbr. node tree 2) of the reference page is shown in FIG. 3. The server respectively compares the data length of node A1 in node tree 1 with the data lengths of node B1, node B2, node B3, node B4, node B5, node B6, and node B7, and finds that the data length of node A1 is different from the data lengths of each of the nodes in node tree 2, so the server determines that node A1 is not a common node. The server respectively compares the data length of node A2 with the data lengths of node B1, node B2, node B3, node B4, node B5, node B6, and node B7, and finds that node A2 and node B2 have the same data length, so node A2 and node B2 may be the same, therefore, the server uses node A2 and node B2 as the common components of the first page and the reference page. By analogy, the server compares the data lengths of other nodes in node tree 1 with the data lengths of nodes in node tree 2. After completing comparisons of all the nodes, the determined common components of the first page and the reference page include node A2, node A4, and node A5. Therefore, the server uses node A2, node A4, and node A5 as the common components of the first page and the reference page.

It should be noted that those of skill in the art should understand that, in an application example, after comparing the nodes in node tree 2 with the nodes in node tree 1, the server uses the nodes in the DOM node tree of the reference page as the common components.

In a specific implementation, after the server determines the common components according to the common components of the first page and the reference page, the server determines a first common component set corresponding to the identifier of the first page. According to the first common component set, the server generates a cache root corresponding to the identifier of the first page. The cache root refers to a text form of the first common component set.

For example, the information of the first page may be the DOM node tree of the first page, and the information of the reference page may be the DOM node tree of the reference page. Information of the first common component set is DOM data of the common components of the first page and the reference page, and the cache root is a Hyper Text Mark-up Language (HTML) document generated according to the DOM data of the first common component set.

It is worth mentioning that the server generates a cache root corresponding to an identifier according to a common component set, so that when the server receives a page request sent by the client terminal, the server can first send the cache root corresponding to the identifier of the page request to the client terminal to reduce a sense of delay.

In an embodiment, before the server generates the cache root corresponding to the identifier of the first page according to the first common component set, the server determines a second common component set corresponding to the identifier of the first page and judges whether a number of the components of the first common component set is less than a number of components of the second common component set. After the server determines that the number of the components of the first common component set is less than the number of the components of the second common component set, the server generates the cache root corresponding to the identifier of the first page according to the first common component set.

Optionally, after the server determines that the number of the components of the first common component set is less than the number of the components of the second common component set, the server updates the information of the reference page corresponding to the identifier of the first page according to the information of the first page. The second common component set is a last determined first common component set corresponding to the identifier of the first page.

Specifically, if the number of the common components of the first common component set is less, it means that the currently received first page is quite different from the reference page. That is, common components of different versions of the page corresponding to the identifier of the first page are changed. Under this situation, the server updates the information of the cache root and the reference page and causes the information of the cache root and the reference page of the server can better fit a webpage corresponding to the identifier.

In an embodiment, the server learns the common components according to a set learning cycle, or the server sets a valid period for the generated cache root after the server generates the cache root. Under this situation, before the server determines that the number of the components of the first common component set is less than the number of the components of the second common component set, the server determines that the cache root corresponding to the identifier of the first page is not expired, or the server determines that the current learning cycle of the identifier of the first page is not ended.

It is worth mentioning that, versions of a page corresponding to a same identifier may change, if a server continues to learn common components of the page, a version of the page before change may affect accuracy of a learning result. When the server learns the common components of the page according to a certain learning cycle, or the server sets a valid period for the cache root, influence of information of the page before change on accuracy of the learning result may be reduced.

It should be noted that those of skill in the art should understand that the learning cycle and the valid period of the cache root can be set as needed, and the present disclosure does not limit a specific duration of the learning cycle and the valid period of the cache root.

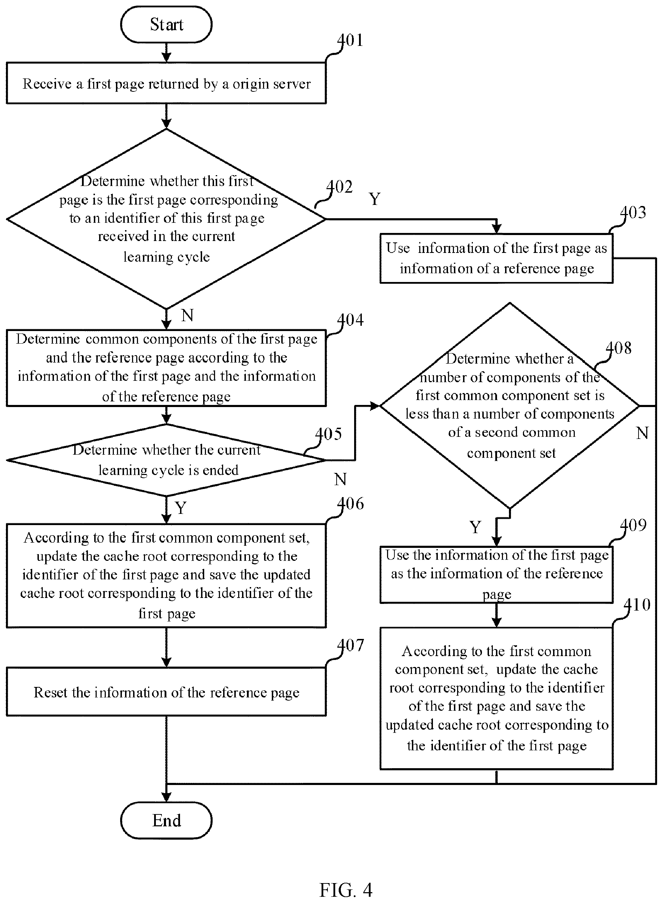

To explain the request, following takes examples in combination with the above-mentioned content to describe processes that the server learns common components of a page according to a certain learning cycle and generates a cache root according to a common component set of the determined page. As shown in FIG. 4, a method that the server generates the cache root of the page includes the following processes.

At 401, the server receives a first page returned by a origin server.

At 402, the server determines whether this first page is the first page corresponding to an identifier of this first page received in the current learning cycle.

Specifically, if yes, the server executes process 403, otherwise, the server executes process 404.

At 403, the server uses the information of the first page as information of a reference page. Then the server ends the process.

Specifically, when the server starts a new learning cycle, no information of the reference page exists. Under this situation, the server initializes the information of the reference page according to the information of the first page. That is, the server uses the information of the first page as the information of the reference page, such that, when the server next time receives a page corresponding to the identifier, the server can learn common components of the page corresponding to the identifier based on the information of the reference page.

At 404, according to the information of the first page and the information of the reference page, the server determines common components of the first page and the reference page.

Specifically, according to the information of the first page and the information of the reference page, the server determines the common components of the first page and the reference page. According to the common components of the first page and the reference page, the server determines a first common component set. A method that the server determines the common components of the first page and the reference page may be made referred to related description of process 103 in the present disclosure, which is not repeated here.

At 405, the server determines whether the current learning cycle is ended.

Specifically, if the server determines that the current learning cycle of the identifier of the first page is ended, the server executes process 406, otherwise, the server executes process 408.

At 406, according to the first common component set, the server updates the cache root corresponding to the identifier of the first page and saves the updated cache root corresponding to the identifier of the first page.

At 407, the server resets the information of the reference page.

Specifically, if the current learning cycle is ended, to avoid the information of the page received in the current learning cycle from affecting a next learning cycle, the server resets the information of the reference page.

After the server executes process 407, the server ends the process and enters a new learning cycle.

At 408, the server determines whether a number of components of the first common component set are less than a number of components of a second common component set.

Specifically, the second common component set is a common component set corresponding to the identifier of the first page determined in a last learning cycle. If the components of the first common component set are less than the components of the second common component set, this condition indicates that the first page changes greatly from the reference page, and the server needs to update the information and cache root of the reference page in order to learn the common components subsequently. If the components of the first common component set are more than the components of the second common component set, or are the same as the components of the second common component set, this condition indicates that the first page does not have an obvious change from the reference page, and the server can continue to use the current reference page and the cache root. Therefore, if the server determines the number of the components of the first common component set is less than the number of the components of the second common component set, the server executes process 409, otherwise, the server ends the process.

It should be noted that those of skill in the art should understand that, in an application example, after the server determines that the number of the components of the first common component set is a number M less than the number of the components of the second common component set, the server executes process 409. The number M is a positive integer.

At 409, the server uses the information of the first page as the information of the reference page.

At 410, according to the first common component set, the server updates the cache root corresponding to the identifier of the first page and saves the updated cache root corresponding to the identifier of the first page.

After process 410, the server ends the process, continues with the current learning cycle, and based on a received new page, continues to learn.

It should be noted that, in the present disclosure, to explain clearly, process 407 is set as a subsequent process of process 406, and process 410 is set as a subsequent process of process 409. However, those of skill in the art should understand that, in an application example, the server can execute process 407 first then execute process 406, and execute process 410 first then execute process 409. The present disclosure does not limit.

It should be noted that those of skill in the art should understand that, when the server sets a valid period for a cache root, a logic of generating the cache root of a page is almost similar as a logic that the server generates a cache root of the page according to a certain learning cycle. When the valid period needs to be set for the cache root, those of skill in the art may refer to related contents of the present disclosure to generate the cache root for the page.

It should be noted that the above is only an exemplary explanation and does not limit the technical solution of the present disclosure.

By comparing to the existing technology, with the method for determining the common components of the page provided by the present disclosure, the server compares the first page with the reference page and can determine the common components of the first page and the reference page without manual inquiry and manual configuration, which avoids the poor feasibility problem of manually configuring the common components. In addition, the server generates or updates the cache root corresponding to the identifier of the page according to the common components, so that the server can return the cache root first when receiving a page access request, which reduces the sense of delay, thereby reducing the waiting time of the client terminal. When the server is an edge server of a content distribution network, the cache root can be stored at the edge server, which improves first screen time of page access.

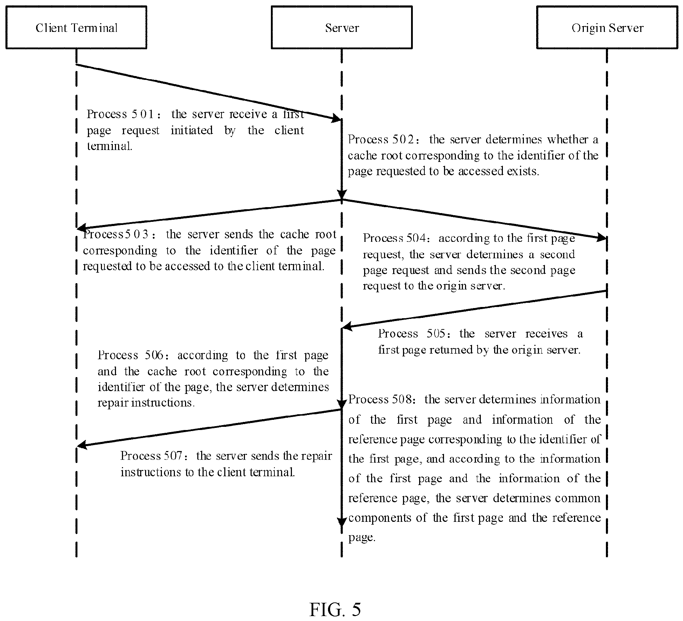

To explain clearly, following describes a method for determining the common components of the page in combination with an interaction process among a server, a client terminal, and a origin server. As shown in Figure 5, the method includes the following processes.

At 501, the server receives a first page request initiated by the client terminal. The first page request may be initiated by a browser of the client terminal, and the first page request includes an identifier of a page requested to be accessed.

At 502, the server determines whether a cache root corresponding to the identifier of the page requested to be accessed exists.

Specifically, if the server determines that the cache root corresponding to the identifier of the page requested to be accessed exists, the server executes process 503 and then executes process 504, otherwise directly executes process 504.

At 503, the server sends the cache root corresponding to the identifier of the page requested to be accessed to the client terminal, and then executes process 504.

Specifically, after the client terminal receives the cache root, the client terminal generates a page according to the cache root and displays the generated page.

At 504, according to the first page request, the server determines a second page request and sends the second page request to the origin server.

It should be noted that, to explain clearly, in the present disclosure, for a situation that the server has the cache root corresponding to the identifier of the first page request, the server executes process 504 as a subsequent process of process 503, In an application example, the server can execute process 504 first and then execute process 503, or execute process 503 and process 504 at the same time. The present disclosure does not limit order of process 503 and process 504.

At 505, the server receives a first page returned by the origin server.

At 506, according to the first page and the cache root corresponding to the identifier of the page, the server determines repair instructions.

Specifically, the server determines different components between the first page and the cache root corresponding to the identifier of the first page, and according to the different components, the server generates the repair instructions to instruct the client terminal to repair the page according to the repair instructions.

At 507, the server sends the repair instructions to the client terminal.

Specifically, after the client terminal receives the repair instructions, according to the repair instructions, the client terminal repairs the page.

At 508, the server determines information of the first page and information of the reference page corresponding to the identifier of the first page, and according to the information of the first page and the information of the reference page, the server determines common components of the first page and the reference page.

A second embodiment of the present disclosure relates to a method for determining common components of a page. The second embodiment is almost the same as the first embodiment, and the main difference is: in the first embodiment, taking an example that the server compares directly the data lengths of the nodes in the DOM node tree of the first page with the data lengths of the nodes in the DOM node tree of the reference page to explain the method of determining the common nodes; however, in the second embodiment of the present disclosure, the server first divides the nodes in the DOM node tree of the first page and the nodes in the DOM node tree of the reference page into the number N comparison sets, and then compares the nodes of each comparison set. N is a positive integer.

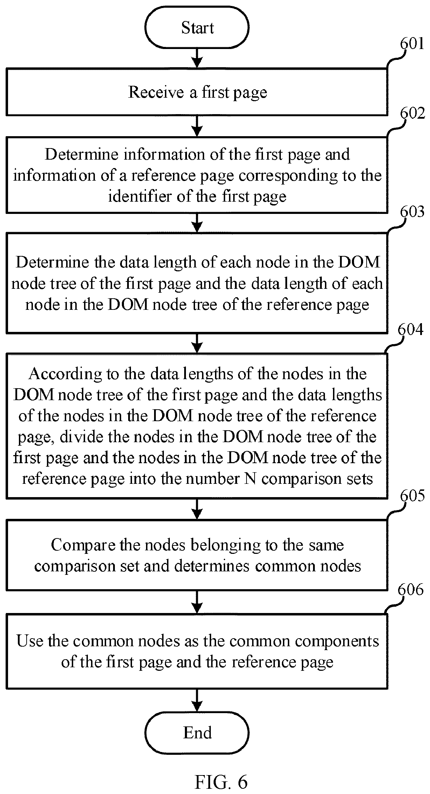

Specifically, as shown in FIG. 6, the present disclosure includes process 601 to process 606, where process 601 and process 602 are almost the same as process 101 and process 102 of the first embodiment, respectively, which are not repeated here. Following explains mainly differences.

The server executes process 601 and process 602.

At 603, the server determines the data length of each node in the DOM node tree of the first page and the data length of each node in the DOM node tree of the reference page.

Specifically, the server parses the first page and the reference page, generates the DOM node tree of the first page and the DOM node tree of the reference page, and determines the data length of each node in the two DOM node trees.

At 604, according to the data lengths of the nodes in the DOM node tree of the first page and the data lengths of the nodes in the DOM node tree of the reference page, the server divides the nodes in the DOM node tree of the first page and the nodes in the DOM node tree of the reference page into the number N comparison sets.

Specifically, the data lengths of the nodes of each comparison set belong to a same pre-set range, and N is a positive integer. The pre-set range of the data lengths of the nodes of each comparison set can be set as needed.

At 605, the server compares the nodes belonging to the same comparison set and determines common nodes.

Specifically, for each node of each comparison set, the server performs following operations: determining whether the node belongs to the DOM node tree of the first page; if belonging to, the server determines in the comparison set whether there is a node belonging to the DOM node tree of the reference page whose difference from the node is smaller than the pre-set value exists; if there is the node, the server uses the node and/or the node belonging to the DOM node tree of the reference page whose difference from the node is smaller than the pre-set value as the common components; if not belonging to, the server determines in the comparison set, whether there is a node belonging to the DOM node tree of the first page whose difference from the node is smaller than a preset value; if there is the node, the server uses the node and/or the node belonging to the DOM node tree of the first page whose difference from the node is smaller than the pre-set value as the common components. The pre-set value can be set as needed, for example, can be set to any number between 10 to 100.

It should be noted that, when the server compares the data lengths of the nodes in the DOM node tree of the first page and the nodes in the DOM node tree of the reference page, the server may also use a level of the node as one of reference factors for determining the common nodes. Those skilled in the art can understand that, in an application example, other tags of the nodes can be used as the reference factors for determining the common nodes.

At 606, the server uses the common nodes as the common components of the first page and the reference page.

Following takes examples in combination with actual situations to explain the method that the server determines the common components.

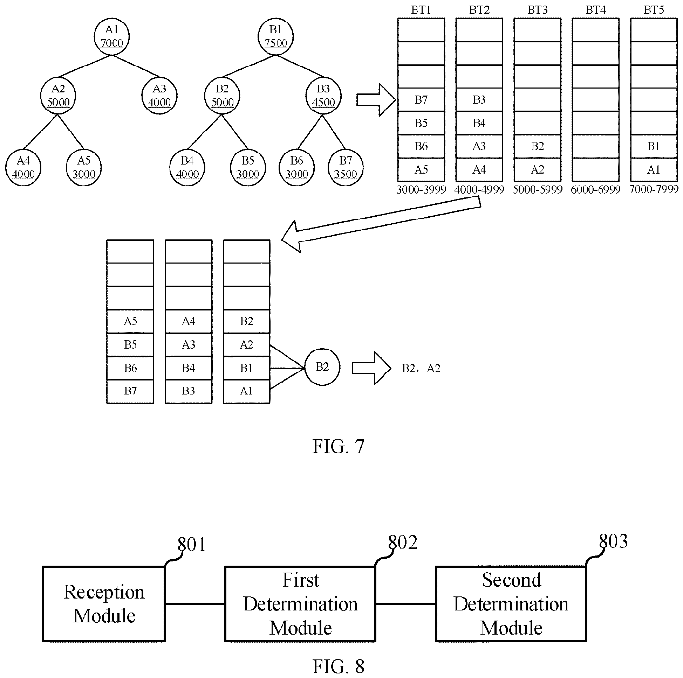

Assume that a schematic diagram of the process that the server determines the common components is shown in FIG. 7. Node tree 1 represents the DOM node tree of the first page, and node tree 2 represents the DOM node tree of the reference page. According to the data lengths of each of the nodes, the server places each of the nodes in node buckets. A first node bucket (BT1) is used to place nodes with a data length of 3000 to 3999, a second node bucket (BT2) is used to place nodes with a data length of 4000 to 4999, a third node bucket (BT3) is used to place nodes with a data length of 5000 to 5999, a fourth node bucket (BT4) is used to place nodes with a data length of 6000 to 6999, and a fifth node bucket (BT5) is used to place nodes with a data length of 7000 to 7999. After the server places the nodes in the DOM node tree of the first page and the nodes in the DOM node tree of the reference page in the five node buckets, the server performs a process to delete a node bucket in which no nodes are placed, a process for replacing nodes in a node bucket with a smaller number of nodes to a same node bucket, and a process of sorting the nodes in the same node bucket according to the data lengths. When the server performs the above-mentioned processes, the server obtains sorting buckets as shown in FIG. 7. After obtaining the sorting buckets, the server compares the nodes of the same sorting bucket, for example, the server respectively compares node B2 with node B1, node A2, and node A1 and finds that the data lengths of node B2 and node A2 are the same, therefore, node B2 is a common node of the first page and the reference page, and node A2 is a common node of the first page and the reference page.

It should be noted that, in the description of the above examples, to explain clearly, when data lengths of two nodes are the same, one of the two nodes is used as a common node. In an application example, the difference between the data lengths of the two nodes is less than the pre-set value, that is, one of the two nodes can be used as a common node. The pre-set value can be set as required.

It should be noted that, for the process of deleting the node bucket in which no node is placed, the process of replacing the nodes in the node bucket with the smaller number of the nodes to the same node bucket, and the process of sorting the nodes in the same node bucket according to the data lengths mentioned in the above examples, the server can selectively execute the above-mentioned three processes or any combination of the above-mentioned three processes.

It is worth mentioning that the server divides the nodes in the DOM node tree of the first page and the nodes in the DOM node tree of the reference page into the number N comparison sets, which can avoid comparing two nodes with large data lengths, reduce comparison times to avoid wasting computing resources.

It should be noted that the above is merely an exemplary explanation and does not limit the technical solution of the present disclosure.

By comparing to the existing technology, with the method for determining the common components of the page provided by the present disclosure, the server first divides the nodes in the DOM node tree of the first page and the nodes in the DOM node tree of the reference page into the number N comparison sets and then compares the nodes of each of the comparison set, which avoids comparing the two nodes with the large data lengths and reduces the comparison times to avoid wasting the computing resources. In addition, the server compares the first page with the reference page and can determine the common components of the first page and the reference page without the manual inquiry and manual configuration, which avoids the poor feasibility problem of manually configuring the common components.

Process division of the various methods above is just for clarity of description. In an implementation, the processes can be combined into one process, or some processes can be split and divided into multiple processes. As long as the processes include a same logical relationship, the processes are all within the scope of the present disclosure. Adding irrelevant modifications or introducing irrelevant design to an algorithm or a process without changing core design of the algorithm and process are within the scope of the present disclosure.

A third embodiment of the present disclosure relates to a determination device of common components of a page, as shown in FIG. 8, which includes a reception module 801, a first determination module 802, and a second determination module 803, where the reception module 801, the first determination module 802, and the second determination module 803 are coupled to execute the method for determining the common components of the page provided by the above-described embodiments.

Specifically, the reception module 801 is configured to receive a first page. The first determination module 802 is configured to determine information of the first page and information of a reference page corresponding to an identifier of the first page. The second determination module 803 is configured to determine common components of the first page and the reference page according to the information of the first page and the information of the reference page.

It is not difficult to find that the present disclosure is a device embodiment corresponding to the first embodiment. The present disclosure can be implemented in cooperation with the first embodiment. Related technical details mentioned in the first embodiment remain effective in the present disclosure, and to reduce duplication, which are not repeated here. Correspondingly, related technical details mentioned in the present disclosure can also be used in the first embodiment.

It is worth mentioning that various modules related by the present disclosure are all logical modules. In an application example, one logical unit may be a physical unit, may also be a part of a physical unit, and may further be implemented by a combination of a plurality of physical units. In addition, to highlight an innovative part of the present disclosure, units that are not closely related to solving the technical problems proposed by the present disclosure are not introduced in the present disclosure, but this does not mean that no other unit exists in the present disclosure.

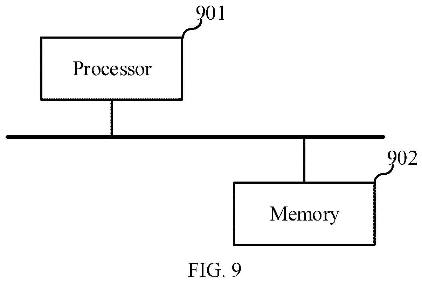

A fourth embodiment of the present disclosure relates to a server, as shown in FIG. 9, which includes at least one processor 901, and a memory 902 communicatively coupled to the at least one processor 901. The memory 902 stores instructions, which can be executed by the at least one processor 901. The instructions are executed by the at least one processor 901 to cause the at least one processor 901 to execute the method for determining the common components of the page mentioned in the above-described embodiments.

The server includes one or more processors 901 and memory 902. FIG. 9 takes one processor 901 as an example. The processor 901 and the memory 902 may be connected by a bus or other methods. FIG. 9 takes the connection with the bus as an example. The memory 902 is a non-volatile computer-readable storage medium, which can be used to store non-volatile software programs and non-volatile computer-executable programs and modules. The information of the reference page in the embodiment of the present disclosure is stored in the memory 902. The processor 901 executes various functional applications and data processing of the device by running non-volatile software programs, instructions, and modules stored in the memory 902, that is, the above-mentioned method for determining the common components of the page is implemented.

The memory 902 may include a program storage area and a data storage area, where the program storage area may store an operating system and an application program required by at least one function, and the data storage area may store a list of options, etc. In addition, the memory 902 may include a high-speed random-access memory, and may further include non-volatile memory, for example, at least one magnetic disk storage device, a flash memory device, or other non-volatile solid-state storage devices. In some embodiments, the memory 902 may optionally include a memory remotely configured relative to the processor 901. These remote memories may be connected to an external device through a network. Examples of the above network include, but are not limited to, internet, intranet, local area network, mobile communication network, and combinations thereof.

One or more modules are stored in the memory 902 and are executed by one or more processors 901 to execute the method for determining the common components of the page in any above-mentioned embodiment.

The above-mentioned product can execute the method provided by the embodiments of the present disclosure and has function modules and beneficial effects corresponding to the execution methods. The technical details not described in the present disclosure in detail can be made referred to the methods provided by the embodiments of the present disclosure.

A fifth embodiment of the present disclosure relates to a computer-readable storage medium storing a computer program. The computer program is executed by a processor to implement the above-mentioned method embodiments.

That is, those skilled in the art should understand that all or a part of the processes of the above-mentioned method embodiments can be completed through the program instructing related hardware. The program stored in a storage medium includes instructions which are used to cause a device (may be a microcontroller, chip, etc.) or a processor to execute all or a part of the processes of the methods described in the embodiments of the present disclosure. The previously mentioned storage medium includes various media that can store program code such as flash drive, mobile hard drive, read-only memory (ROM), random access memory (RAM), magnetic disk, optical disk, etc.

Those of ordinary skill in the art should understand that the above-mentioned embodiments are specific embodiments to implement the present disclosure. However, in an application example, various modifications can be made to forms and details without departing from the spirit and scope of the present disclosure.

## Claims

1. A method for determining common components of a page, comprising:
receiving a first page;
determining information of the first page and information of a reference page corresponding to an identifier of the first page; and
according to the information of the first page and the information of the reference page, determining common components of the first page and the reference page.

2. The method according to claim 1, wherein:
the information of the first page is a document object model (DOM) node tree of the first page, and the information of the reference page is a DOM node tree of the reference page; and
according to the information of the first page and the information of the reference page, determining the common components of the first page and the reference page specifically includes:
determining a data length of each node of the DOM node tree of the first page and a data length of each node of the DOM node tree of the reference page;
comparing the data lengths of the nodes of the DOM node tree of the first page with the data lengths of the nodes of the DOM node tree of the reference page to determine common nodes of the DOM node tree of the first page and the DOM node tree of the reference page; and
using the common nodes as the common components of the first page and the reference page.

3. The method according to claim 2, wherein comparing the data lengths of the nodes in the DOM node tree of the first page with the data lengths of the nodes in the DOM node tree of the reference page to determine common nodes of the DOM node tree of the first page and the DOM node tree of the reference page includes:
according to the data lengths of the nodes in the DOM node tree of the first page with the data lengths of the nodes in the DOM node tree of the reference page, dividing the nodes in the DOM node tree of the first page and the nodes in the DOM node tree of the reference page into a number N comparison sets, wherein the data lengths of the nodes of each comparison set belong to a same pre-set range and N is a positive integer; and
comparing the nodes belonging to a same comparison set to determine the common nodes.

4. The method according to claim 3, wherein comparing the nodes belonging to a same comparison set to determine the common nodes includes:
for each node of each of the comparison sets, performing following processes:
determining whether the node belongs to the DOM node tree of the first page;
if belonging to, determining in the comparison set, whether there is a node belonging to the DOM node tree of the reference page whose difference from the node is smaller than a preset value;
if there is the node, using the node and/or the node belonging to the DOM node tree of the reference page whose difference from the node is smaller than the pre-set value as the common components; and
if not belonging to, determining in the comparison set, whether there is a node belonging to the DOM node tree of the first page whose difference from the node is smaller than a preset value;
if there is the node, using the node and/or the node belonging to the DOM node tree of the first page whose difference from the node is smaller than the pre-set value as the common components.

5. The method according to claim 1, wherein after determining the common components of the first page and the reference page according to the information of the first page and the information of the reference page, the method further comprises:
according to the common components of the first page and the reference page, determining a first common component set corresponding to the identifier of the first page; and
according to the first common component set, generating a cache root corresponding to the identifier of the first page.

6. The method according to claim 5, wherein before generating the cache root corresponding to the identifier of the first page according to the first common component set, the method further comprises:
determining a second common component set corresponding to the identifier of the first page, wherein the second common component set is a last determined common component set corresponding to the identifier of the first page; and
determining a number of components of the first common component set less than a number of components of the second common component set.

7. The method according to claim 6, wherein before determining the number of the components of the first common component set less than the number of the components of the second common component set, the method further comprises:
determining that the cache root corresponding to the identifier of the first page is not expired; or
determining that a current learning cycle of the identifier of the first page is not ended.

8. The method according to claim 6, wherein after determining the number of the components of the first common component set less than the number of the components of the second common component set, the method further comprises:
according to the information of the first page, updating the information of the reference page corresponding to the identifier of the first page.

9. The method according to claim 1, wherein after determining the information of the reference page corresponding to the identifier of the first page, the method further comprises:
if the information of the reference page is determined blank, using the information of the first page as information of a reference page of a next process of determining common components of a page.

10. The method according to claim 5, wherein before receiving the first page, the method further comprises:
process a: receiving a first page request sent from a client terminal, wherein the first page request includes an identifier of a page requested to be accessed;
process b: determining whether the cache root corresponding to the identifier of the page requested to be accessed exists; and if yes, executing process c, otherwise executing process d;
process c: sending the cache root corresponding to the identifier of the page requested to be accessed to the client terminal and then executing process d; and
process d: according to the first page request, determining a second page request and sending the second page request to a origin server.

11. The method according to claim 10, wherein after receiving the first page, the method further comprises:
according to the first page and the cache root corresponding to the identifier of the page requested to be accessed, determining repair instructions; and
sending the repair instructions to the client terminal.

12. The method according to claims 1 to 11, wherein the identifier is a uniform resource identifier (URI).

13. A server, comprising:
at least one processor; and
a memory, communicatively coupled to the at least one processor, wherein the memory stores instructions executable by the at least one processor, and the instructions are executed by the at least one processor to cause the at least one processor to execute the method for determining the common components of the page according to any of claims 1 to 12.

14. A computer-readable storage medium, storing a computer program, wherein the computer program is executed by a processor to implement the method for determining the common components of the page according to any of claims 1 to 12.
